(19) Europäisches Patentamt

European Patent Office

Office européen des brevets

(11) Publication number: **0 231 553 B1**

# (12) EUROPEAN PATENT SPECIFICATION

(45) Date of publication of patent specification: **26.06.91**    (51) Int. Cl.⁵: **G03B 21/62**

(21) Application number: **86202350.4**

(22) Date of filing: **22.12.86**

(54) Transmission projection screen and method of manufacturing same.

(30) Priority: **10.01.86 NL 8600042**

(43) Date of publication of application:
**12.08.87 Bulletin 87/33**

(45) Publication of the grant of the patent:
**26.06.91 Bulletin 91/26**

(84) Designated Contracting States:
**DE FR GB IT NL SE**

(56) References cited:
**EP-A- 0 148 529**
**EP-A- 0 154 053**

(73) Proprietor: **N.V. Philips' Gloeilampenfabrieken**
**Groenewoudseweg 1**
**NL-5621 BA Eindhoven(NL)**

(72) Inventor: **van der Hoorn, Gustaaf Herman Antonius**
**c/o INT. OCTROOIBUREAU B.V. Prof. Holstlaan 6**
**NL-5656 AA Eindhoven(NL)**
Inventor: **van der Staak, Caspert Gerardus Ignatius**
**c/o INT. OCTROOIBUREAU B.V. Prof. Holstlaan 6**
**NL-5656 AA Eindhoven(NL)**
Inventor: **Lamberts, Joseph Johan Maria**
**c/o INT. OCTROOIBUREAU B.V. Prof. Holstlaan 6**
**NL-5656 AA Eindhoven(NL)**
Inventor: **Schmitz, Johannes Hubertus Antonius**
**c/o INT. OCTROOIBUREAU B.V. Prof. Holstlaan 6**
**NL-5656 AA Eindhoven(NL)**

(74) Representative: **Pennings, Johannes et al**
**Internationaal Octrooibureau B.V. Prof. Holstlaan 6**
**NL-5656 AA Eindhoven(NL)**

## Description

The invention relates to a transmission projection screen comprising a transparent substrate having a front surface which is provided with parallel ribs from which light issues during operation of the screen, the ribs being separated by grooves, in each of which a quantity of light-absorbing particles is disposed.

The invention also relates to a method of manufacturing a transmission projection screen.

Such a screen is used, for example, for displaying images or alphanumeric data which are projected onto the rear surface of the screen, for example, by a lens system with one or more cathode-ray tubes or by a film projector. The transparent ribs on the front surface of the screen focus the light rays which are received from the rear side and which issue via the crests of the ribs. In order to avoid reflection of ambient light from both the front side and the rear side of the screen, which would reduce the contrast of the image to be displayed, a light-absorbing material is disposed in the grooves. It is known to those skilled in the art that for this purpose a black lacquer layer may be applied or that black wires may be disposed in the grooves. A disadvantage of these screens is that they may be subject to warping due to mechanical forces acting on one side of the screen, for example under the influence of moisture.

From European Patent Application EP 154053 a transmission projection screen and a method of manufacturing such a screen are known, in which method discrete black particles are deposited and fixed in the grooves. The black particles are small relative to the cross-sectional dimensions of the grooves so as to enable them to be deposited easily and evenly.

The black particles consist of, for example, soot or a ferritic material having a synthetic resin skin. By temporarily subjecting the particles to heat or a solvent vapour, a cohesive synthetic resin skin is formed over the particles, which skin retains the particles in the grooves.

A disadvantage of the screen thus manufactured is that there are many contact points between the walls of the ribs and the light-absorbing material. Consequently, light which should be totally reflected at the inside of the walls in order to be transmitted to the front side is absorbed instead, thus reducing the light output of the screen.

It is an object of the invention to provide a transmission projection screen in which there is a very slight optical contact between the light-absorbing material and the substrate with the ribs is obtained in order to leave the light output substantially uneffected while improving the contrast. This object is achieved in accordancd with the invention by a transmission projection screen as described in the opening paragraph, which screen is further characterized in that the average particle size is from 20 to 75 % of the width of the grooves measured halfway between the top and bottom of the grooves.

In a preferred embodiment of the projection screen in accordance with the invention, the average size of the particles is 50 to 70 % of the width of the grooves measured halfway between the top and bottom of the grooves.

Due to the relatively large dimension of the particles, few particles are needed to obtain the desired light absorption. Because of the small number of particles there are only few contact areas between the particles and the walls of the ribs. The maximum particle size is determined by the desire to have the particles situated entirely in the bottom half of the grooves in order not to absorb the light issuing from the crests of the ribs. Limiting the size of the particles is also desirable in order to fill the grooves evenly in the longitudinal direction so as to obtain a screen having a smooth appearance.

A further object of the invention is to provide a method of manufacturing a transmission projection screen, in which also relatively large light-absorbing particles can readily be deposited in the grooves. An additional object of the invention is to provide a method by means of which any type of light-absorbing particle can be deposited, even if they are not provided with a synthetic-resin layer.

This object is achieved in accordance with the invention by a method which comprises the following steps:

- coating a substrate having parallel ribs with a layer of adhesive which has a solids content from 0.5 to 20% by weight,
- removing excess adhesive with an absorbent material so that only the bottoms of the grooves remain coated with adhesive,
- drying the adhesive so that a thin sticky layer is formed on the bottom part of the wall of each groove,
- depositing an excess of light-absorbing particles on the screen, with an average particle size from 20 to 75% of the width of the grooves measured halfway between the top and the bottom of the grooves, and
- moving a brush over the screen in the longitudinal direction of the grooves, or moving the screen past a brush in said direction, so that the light-absorbing particles are pressed to the bottom of the grooves by the brush, and removing the excess particles from the screen.

In order to ensure that after drying the adhesive layer does not fill the grooves and does not adversely affect the shape of the ribs, the solids content of the adhesive used is preferably between 0.5 and 20 % by weight. Thus, the internal reflection of the light in the ribs remains optimal.

The adhesive layer is so situated that the light-absorbing particles are fixed only in the bottom parts of the grooves, the remaining particles being brushed away. Moreover, by using large particles it is precluded that light-absorbing particles remain on the crests of the ribs, for example, at the location of a possible lens structure.

The choice of the adhesive is dictated by the materials used for the substrate with the ribs and for the light-absorbing particles. The adhesive used must meet the requirements that it remains sticky after drying and that it forms a smooth surface.

An alternative embodiment of the method in accordance with the invention comprises the following steps:

- depositing an excess of light-absorbing particles on a substrate having parallel ribs, with an average particle size from 20 to 75% of the width of the grooves measured halfway between the top and the bottom of the grooves,
- moving a brush over the screen in the longitudinal direction of the grooves, or moving the screen past a brush in said direction, so that the light-absorbing particles are pressed to the bottom of the grooves by the brush, and removing the excess particles from the screen,
- coating the screen with a quantity of adhesive which is sufficient to fill the grooves and which has a solids content from 0.5 to 20% by weight, and
- drying the adhesive so that a bond is formed between the light-absorbing particles and the walls of the grooves.

An advantage of this alternative method is that the adhesive layer does not have to remain sticky after drying, and consequently the screen obtained is substantially immune to contamination, for example, by dust.

A requirement which must be met by the light-absorbing particles is that they do not break down into smaller particles when they are subjected to common mechanical treatments, such as brushing, because this would nullify the desired effect of the invention. Suitable light-absorbing materials are, for example, soot, ferrite particles, black synthetic-resin particles, black glass beads and short pieces of black glass fibre. The particles may have any shape, provided that the number of contact areas between the particles and the walls of the grooves does not increase. Preferably, particles are used having curved surfaces, for example particles with convex surfaces, because in general such particles establish only point contact with the substrate and the ribs. The particles may be formed by bonding together smaller particles, provided that they are strongly bonded, for example by sintering.

The invention will now be further explained by means of exemplary embodiments thereof and with reference to the drawings, in which

Fig. 1 is a perspective sectional view of part of a substrate having parallel ribs,

Figs. 2a-c show schematically a number of steps in an embodiment of the method in accordance with the invention, and

Fig. 3 is a sectional view of part of a screen, produced by an alternative embodiment of the method in accordance with the invention.

Exemplary embodiment 1

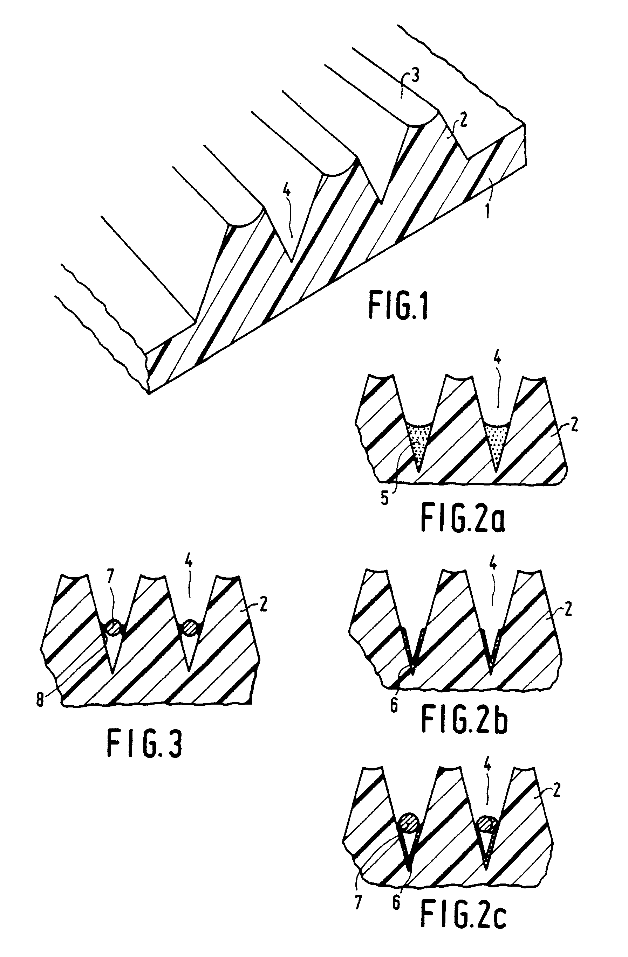

Fig. 1 shows part of a substrate 1, for example of polymethyl-methacrylate, provided with parallel ribs 2 on its front surface. The screen shown in the drawing is flat, but the invention may also be applied to a slightly curved screen. The ribs 2 are provided at their crests with a lens structure 3. However, dependent upon the desired optical characteristics of the screen, the crests of the ribs may have various shapes. The ribs 2 are separated by grooves 4 of V-shaped cross-section. The grooves may also have, for example, flat bottoms. The ribs and the grooves may be formed on the surface of the substrate by means, for example, of a replication technique which is known per se, from, for example, a curable synthetic resin composition, for example, one that can be cured by UV light. In an alternative method, the ribs and grooves are formed on a substrate by hot-pressing. The rear surface of the substrate (not shown in the drawing) may also be provided with an optical element, for example, a fresnel structure.

In the present embodiment, the pitch of the parallel grooves, 4, i.e. the distance between adjacent grooves at their deepest points, is 550 $\mu$m, and the depth of the grooves 4 is 900 $\mu$m.

A quantity of acrylate-resin adhesive is poured on and spread over the front surface of the screen. The adhesive is a 10 % emulsion in water of Terokal 3199® which is marketed by Teroson GmbH in Heidelberg (DE). The excess adhesive is wiped off by means of an absorbent, non-fluff cloth, for example, of non-woven cellulose. Fig.2a is a sectional view of the ribs 2, showing a quantity of adhesive 5 in the bottom of each groove 4.

Subsequently, the adhesive is dried by heating it to 50°C for 15 minutes to form a layer of adhesive in the bottom of each groove 4, as shown in Fig. 2b, which layer has a thickness of only a few $\mu$m.

Subsequently, an excess of black ferrite particles having dimensions of from 100 to 125 $\mu$m is

deposited along one of the edges of the screen. The black particles are then brushed into the grooves in the longitudinal direction of the grooves by means of a nylon® brush (not shown). Either the brush can be moved over the screen or the screen can be moved past the brush.

In the preferred case that the particles are approximately spherical, the expression "dimension" indicates the diameter of such particles.

Fig. 2c shows the particles 7 which stick to the adhesive layer 6 at the bottom of each groove 4. The remaining particles are pressed into the grooves elsewhere or are wiped off the screen.

The bristless of the nylon® brush used all have the same dimensions which are selected so that the bristles can press the black particles deep into the grooves. Because of the desired reproducibility of the method, preferably a rotating brush is used whose pressure on the screen can be accurately adjusted and past which the screen is moved by mechanical means.

Exemplary embodiment 2

In this embodiment the screen is similar to that described in the previous embodiment except that the pitch of the grooves is 275 µm and the depth of the grooves is 440 µm. The adhesive used is a solvent which comprises acrylate-resin glue. The light-absorbing particles consist of soot and their dimensions are from 50 to 80 µm. The method used is the same as described in exemplary embodiment 1.

Exemplary embodiment 3

In this embodiment the screen is similar to that described in Example 2, in which the pitch of the grooves is 275 µm and the depth of the grooves is 440 µm. By means of a brush as described in embodiment 1, light-absorbing particles consisting of soot and having dimensions of from 50 to 80 µm are deposited in the grooves. Subsequently, a solution of 2.5 % by weight of polymethylmethacrylate in ethylacetate/isopropanol (volume ratio of the mixture 1 : 1) is applied to the surface. The grooves are filled by capillary action. If necessary, the excess adhesive is removed by means of an absorbent, non-fluff cloth.

Fig.3 is a sectional view of the result obtained after evaporation of the solvent (for example at 50°C for 15 minutes). The polymethylmethacrylate adhesive layer 8 is situated almost exclusively at the location of the glued particles 7. The adhesive layer 8 does not stick after the adhesive has dried.

The projection screens manufactured in accordance with the above-described embodiments of the invention have a high light output and a satisfactory contrast, and they are sufficiently resistant to the action of mechanical influences, moisture and cleaning agents.

## Claims

1. A transmission projection screen comprising a transparent substrate having a front surface which is provided with parallel ribs from which light issues during operation of the screen, the ribs being separated by grooves in each of which a quantity of light-absorbing particles is disposed, characterized in that the average particle size is from 20 to 75 % of the width of the grooves measured halfway between the top and bottom of the grooves.

2. A transmission projection screen as claimed in Claim 1, characterized in that the average size of the particles is 50 to 70 % of the width of the grooves measured halfway between the top and bottom of the grooves.

3. A method of manufacturing a transmission projection screen as claimed in Claim 1 or 2, characterized in that the method comprises the following steps:
   - coating a substrate having parallel ribs with a layer of adhesive which has a solids content from 0.5 to 20% by weight,
   - removing excess adhesive with an absorbent material so that only the bottoms of the grooves remain coated with adhesive,
   - drying the adhesive so that a thin sticky layer is formed on the bottom part of the wall of each groove,
   - depositing an excess of light-absorbing particles on the screen, with an average particle size from 20 to 75% of the width of the grooves measured halfway between the top and bottom of the grooves,
   - moving a brush over the screen in the longitudinal direction of the grooves, or moving the screen past a brush in said direction, so that the light-absorbing particles are pressed to the bottom of the grooves by the brush, and removing the excess particles from the screen.

4. A method of manufacturing a transmission projection screen as claimed in Claim 1 or 2, characterized in that the method comprises the following steps:
   - depositing an excess of light-absorbing particles on a substrate having parallel ribs, with an average particle size from 20 to 75% of the width of the grooves measured halfway between the top and the bottom of the grooves,

- moving a brush over the screen in the longitudinal direction of the grooves, or moving the screen past a brush in said direction, so that the light-absorbing particles are pressed to the bottom of the grooves by the brush, and removing the excess particles from the screen,
- coating the screen with a quantity of adhesive which is sufficient to fill the grooves and which has a solids content from 0.5 to 20% by weight, and
- drying the adhesive so that a bond is formed between the light-absorbing particles and the walls of the grooves.

**Revendications**

1. Ecran de projection à transmission comportant un substrat transparent présentant une surface frontale munie de nervures parallèles dont sort de la lumière pendant le fonctionnement de l'écran, les nervures étant séparées par des sillons dans lesquels est disposée une quantité de particules absorbant la lumière, caractérisé en ce que la dimension moyenne des particules est de 20 à 75% de la largeur des sillons mesurée à mi-chemin entre le sommet et le fond des sillons.

2. Ecran de projection à transmission selon la revendication 1, caractérisé en ce que la dimension moyenne des particules est de 50 à 70% de la largeur des sillons mesurée à mi-chemin entre le sommet et le fond des sillons.

3. Procédé pour la fabrication d'un écran de projection à transmission selon la revendication 1 ou 2, caractérisé en ce que le procédé comprend les étapes suivantes:
   - revêtement d'un substrat muni de nervures parallèles d'une couche d'adhésif présentant une teneur en substance solide comprise entre 0,5 et 20% en poids,
   - enlèvement de l'adhésif excédentaire avec un matériau absorbant de façon que seuls les fonds des sillons restent recouverts d'adhésif,
   - séchage de l'adhésif de façon qu'une couche visqueuse mince se forme sur la partie inférieure de la paroi de chaque sillon,
   - dépôt d'un excès en particules absorbant la lumière sur l'écran, la dimension moyenne des particules étant de 20 à 75% de la largeur des sillons mesurée à mi-chemin entre le sommet et le fond des sillons,
   - déplacement d'une brosse sur l'écran dans la direction longitudinale des sillons ou déplacement de l'écran sur une brosse dans ladite direction de façon que les particules absorbant la lumière soient pressées dans la partie inférieure des sillons par la brosse et enlèvement des particules excédentaires de l'écran.

4. Procédé pour la fabrication d'un écran de projection à transmission selon la revendication 1 ou 2, caractérisé en ce que le procédé comprend les étapes suivantes:
   - dépôt d'un excès en particules absorbant la lumière sur un substrat présentant des nervures parallèles, la dimension moyenne des particules étant comprise entre 20 et 75% de la largeur des sillons mesurée à mi-chemin entre le sommet et le fond des sillons,
   - déplacement d'une brosse sur l'écran dans la direction longitudinale des sillons ou déplacement de l'écran sur une brosse dans ladite direction de façon que les particules absorbant la lumière soient pressées dans la partie inférieure des sillons par la brosse et enlèvement des particules excédentaires de l'écran,
   - revêtement de l'écran d'une quantité d'adhésif qui suffit pour remplir les sillons et qui présente une teneur en substance solide comprise entre 0,5 et 20% en poids et
   - séchage de l'adhésif de façon qu'il se forme une liaison entre les particules absorbant la lumière et les parois des sillons.

**Ansprüche**

1. Durchsichtprojektionsschirm mit einem transparenten Substrat mit einer Vorderfläche, die mit parallelen Rippen versehen ist, durch die bei Gebrauch des Schirms Licht hindurchgeht, wobei die Rippen durch Rillen voneinander getrennt sind, in denen je eine Menge lichtschluckender Teilchen vorgesehen sind, **dadurch gekennzeichnet,** daß die mittlere Teilchengröße zwischen 20 und 70% der Weite der Rillen beträgt, gemessen in der Mitte zwischen der Oberseite und dem Boden der Rillen.

2. Durchsichtprojektionsschirm nach Anspruch 1, **dadurch gekennzeichnet,** daß die mittlere Teilchengröße zwischen 50 und 70% der Wei-

3. Verfahren zum Herstellen eines Durchsichtprojektionsschirms nach Anspruch 1 oder 2, **dadurch gekennzeichnet**, daß das Verfahren die folgenden Verfahrensschritte aufweist:

- ein Substrat mit parallelen Rippen wird mit einer Klebschicht bedeckt, die einen Feststoffgehalt von 0,5 bis 20 Gew. % aufweist,
- der überflüssige Klebstoff wird mit einem Lösungsmittel entfernt, so daß nur der Boden der Rillen mit Klebstoff bedeckt bleiben,
- der Klebstoff wird getrocknet, so daß auf dem Bodenteil der Wände jeder Rille eine dünne klebrige Schicht gebildet wird,
- ein Überschuß lichtschluckender Teilchen wird auf den Schirm gegeben, wobei die mittlere Teilchengröße zwischen 20 und 70 % der Weite der Rillen beträgt, gemessen in der Mitte zwischen der Oberseite und dem Boden der Rillen,
- es wird eine Bürste in der Längsrichtung der Rillen über den Schirm bewegt oder der Schirm wird in der genannten Richtung über eine Bürste bewegt, so daß die Bürste die lichtschluckenden Teilchen auf den Boden der Rillen hin drückt und die überflüssigen Teilchen vom Schirm entfernt werden.

4. Verfahren zum Herstellen eines Durchsichtprojektionsschirms nach Anspruch 1 oder 2, **durch gekennzeichnet,** daß das Verfahren die folgenden Verfahrensschritte aufweist:

- ein Überschuß lichtschluckender Teilchen wird auf den Schirm gegeben, wobei die mittlere Teilchengröße zwischen 20 und 75 % der Weite der Rillen beträgt, gemessen in der Mitte zwischen der Oberseite und dem Boden der Rillen,
- es wird eine Bürste in der Längsrichtung der Rillen über den Schirm bewegt oder der Schirm wird in der genannten Richtung über eine Bürste bewegt, so daß die Bürste die lichtschluckenden Teilchen auf den Boden der Rillen hin drückt und die überflüssigen Teilchen vom Schirm entfernt werden,
- der Schirm wird mit Klebstoff bedeckt, und zwar mit einer Menge, die ausreicht um die Rillen zu füllen, wobei der Klebstoff einen Feststoffgehalt zwischen 0,5 und 20 Gew. % hat, und

te der Rillen beträgt, gemessen in der Mitte zwischen der Oberseite und dem Boden der Rillen.

- der Klebstoff wird getrocknet, so daß zwischen den lichtschluckenden Teilchen und den Wänden der Rillen eine Verbindung gebildet wird.

FIG.1

FIG.2a

FIG.3

FIG.2b

FIG.2c